(19) Europäisches Patentamt
European Patent Office
Office européen des brevets

(11) Publication number: **0 019 425**
**B1**

(12) # EUROPEAN PATENT SPECIFICATION

(45) Date of publication of patent specification: **01.12.82**

(51) Int. Cl.$^3$: **C 04 B 35/52**, F 27 B 13/00

(21) Application number: **80301512.2**

(22) Date of filing: **08.05.80**

(54) **Process for baking carbon electrodes.**

(30) Priority: **17.05.79 US 39751**

(43) Date of publication of application:
**26.11.80 Bulletin 80/24**

(45) Publication of the grant of the patent:
**01.12.82 Bulletin 82/48**

(84) Designated Contracting States:
**CH DE FR GB LI NL**

(56) References cited:
DE - A - 2 010 372
FR - A - 2 375 150
GB - A - 1 422 833
GB - A - 2 021 742
US - A - 2 699 931
US - A - 3 744 959

SILIKATTECHNIK, vol. 9, 1958 Veb Verlag für Bauwesen, BERLIN (DD) ANON: "Ziegelbrennen mit Wasserdampf in der Brennzone" pages 18-19

(73) Proprietor: **ALCAN RESEARCH AND DEVELOPMENT LIMITED**
**1, Place Ville Marie**
**Montreal Quebec H3C 3H2 (CA)**

(72) Inventor: **Holdner, Donald Norman**
**P.O. Box 118**
**Falardeau Quebec (CA)**

(74) Representative: **Hewlett, Arthur James et al,**
**STEVENS, HEWLETT & PERKINS 5 Quality Court**
**Chancery Lane**
**London WC2A 1HZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 019 425 B1

# Process for baking carbon electrodes

This invention relates to baking carbon bodies, such as electrodes for use in molten electrolytes or for other electrical purposes. The invention is particularly, but not exclusively, concerned with the production of carbon anodes of the pre-baked type, for use in conventional electrolytic reduction cells for production of aluminium. Carbon anodes for this purpose are typically made from finely-divided calcined petroleum coke mixed with a pitch or tar binder. The mixed mass is compressed to provide self-sustaining "green" bodies of desired shape. These "green" carbon anode bodies are subjected to baking at temperatures of 1000°—1400°C or higher to yield finished bodies of suitable hardness, coherence and impact strength for the intended use, including resistance to thermal effects and erosion in the molten alumina-salt baths of a typical electrolytic reduction cell.

Baking of carbon bodies of the present type is performed in the absence of air currents to avoid excessive loss of carbon by burning. The baking operation is conveniently performed in a so-called ring furnace, which comprises a series of individual pits, the walls of which are in heat exchange relationship with a gas flue which forms a complete ring around the series of pits. The ring furnace may be of the horizontal-flue open-pit type or the vertical-flue covered-pit type. Atmospheric air may be introduced into the flue at any desired location and progressed along the flue for exhaustion therefrom at another location. Heat is introduced into the air stream in the flue at one or more intermediate firing locations, usually by the injection of gas or liquid fuel which is burnt in the air stream. The firing location or locations is periodically advanced along the flue in the direction of gas flow from a position adjacent one pit to a position adjacent the next pit and the positions of the atmospheric air inlet and the gas exhaust from the flue are similarly advanced. In consequence the temperature of the contents of a pit progressively rises with the advance of the firing location and then progressively declines as the firing location passes and advances beyond it.

Between the air inlet and the firing location, the air stream takes up heat from the contents of the series of pits by heat exchange through the flue walls, whereas between the firing location and the gas exhaust the contents of the pits undergo preheating by uptake of heat from the hot flue gas by heat exchange through the pit walls. There is thus an interrelationship between the gas temperature and the adjacent pit temperature at any location along the series of pits and the rate of heat transfer through the flue wall at any location is dependent, *inter alia,* on the temperature difference between the flue gas and the pit. The sequence of preheating, baking and cooling carbon bodies can also be performed by advancing carbon bodies either continuously or by steps through a tunnel kiln, having a flue or flues in the kiln wall.

It has already been proposed in United States Patent No. 3,744,959 in the operation of a ring furnace for production of carbon anodes to reduce the rate of heat transfer from the gas to a pit at one or more locations between the firing location and the gas exhaust location so as to restrict the rate of evolution of gaseous materials during carbonisation of the binder of the "green" anodes while they are at a critical stage in preheating to the final baking temperature. The reduction in the heat transfer rate is achieved by injecting a diluting substance, such as air or water, into the flue gas at a position adjacent one or more of the pits so as to effect local cooling of the gas with consequent reduction of heat transfer to the partially preheated "green" anode in the pit or pits.

The object of the present invention is totally different and is directed to achieving increased heat transfer between the pits and the gas stream in the flue of a ring furnace. This is achieved by injecting water in liquid or vapour form into the flue at one or more locations between the air inlet location and the firing location. The improvement achieved by this simple measure is due to the improved rate of heat transfer between the flue wall and air/water vapour mix as compared with the rate of heat transfer between the flue wall and air. In addition there is a lowering of the air temperature at the location or locations of water injection, particularly when water is injected in droplet form. It is in fact always preferred to inject water in droplet form because of the increased cooling effect on the air stream which is effecting cooling of the already baked anodes in the adjacent pits.

In a typical ring furnace 4 to 8 pits are arranged side-by-side at each pit location and each of such pits is in a ring of 16 to 80 pits arranged end-to-end in two parallel rows. The flues for the two rows in a ring are connected by crossover flues so that the continuous ring may be completed.

In a typical operation of baking carbon anodes, at any instant three or four pits per row are employed in preheating "green" bodies, the next two or three pits are maintained at baking temperature and in the following six or seven pits the baked carbon bodies are progressively cooled. Air enters the flue system adjacent the last of the pits under cooling and is progressively heated as it passes the series of such pits. In the region of the baking pits hot gases or fuel is injected into the gas stream to bring it to its maximum temperature. Thereafter the gas stream loses its heat to the series of preheating pits and is then exhausted from the flue system. The firing location, at which fuel is injected into the gas stream, is advanced by a distance of one pit length at intervals of 18 to 64 hours, for example, and the air inlet and gas exhaust locations are advanced by like distances. At each change an unheated pit, loaded with green carbon bodies, is added to the operating pits in each row and a pit containing baked and cooled carbon bodies is removed from the series of operating pits. In this way each filled pit is subjected to the entire series of steps, over a total period of many days.

In a practical furnace there are many rows of pits arranged side-by-side. There may be several series of operating pits in a single ring. A series of operating pits, which may be considered as a temporary baking unit may be separated by several pits from the next operating series by blocking the flues between the two series. These intervening pits constitute a station for unloading baked carbon bodies and loading green carbon bodies.

The flues have service ports adjacent each pit. These ports are closed except when used for air inlet, firing and gas exhaust. Conveniently the firing burner and the exhaust, and optionally the inlet air supply, are arranged as manifolds crossing the array of rows for co-operation with the appropriate ports and movable to successive positions along the array. A number of such manifolds are provided whereby a number of temporary baking units can be set up in each row of pits.

Each pit goes through a cycle of loading, preheating, baking, cooling and unloading, which usually requires from about 10 to 30 days or more, a typical time being about 26 days. The baking capacity of a ring furnace system is dependent on the cycle time required to process each carbon body. In the case of anodes for an aluminium smelter, the cost of baking the anodes represents a very significant cost item in smelter operation.

A reduction in the baking cycle time permits an increase in the production of finished carbon bodies from the ring furnace. In baking carbon anodes the rate of heating the green anodes to the final baking temperature should not exceed about 4 to 12°C/hour. The rate of cooling baked anodes is, comparatively, not critical, and may be carried out more quickly to shorten the total cycle time and achieve maximum production. Unfortunately, the cooling step is slow, chiefly because of the low heat carrying capacity of the cooling gas and low heat transfer coefficients associated with it. Thus the cooling step occupies a large number of pits in each temporary baking unit.

Forced air cooling has been employed to increase the cooling rate but involves too large an air input for efficient preheating of air in advance of the firing location and heat recovery in the preheating stage of the ring furnace. In consequence it has been necessary to exhaust a large part of the forced air in advance of the firing locality with consequent large heat loss.

As already indicated, the feature of the present invention is the introduction of water, either as liquid or vapour (steam), into the flue system of a ring furnace for baking carbon bodies at a location between the air inlet location(s) and the firing location (or first firing location in the direction of gas flow in the flue). Most conveniently water is sprayed into the flue system. Since the air is heated very quickly after admission to the air inlet the sprayed water is promptly converted to water vapour. As compared with the introduction of excess cooling air the incorporation of water into the air stream has the advantage that water can absorb four times the amount of heat that air can in raising its temperature from 0 to 1000°C. The presence of water vapour as radiation absorber also substantially increases the flue wall heat transfer coefficient. Hence, the introduction of a small amount of water sprayed into the flue substantially increases both the heat absorbing capacity of the cooling gas and the rate of heat transfer at the flue wall. In consequence, the anode baking process is greatly improved in terms of overall process time without any negative effects on the atmosphere in the furnace building. By reason of greater heat recovery, some increase in operating efficiency is obtained as compared with the use of forced air cooling.

The gas stream entering the baking zone of the flue system carries water vapour. Because the specific heat of the air-water vapour mixture is slightly higher and the emissivity considerably higher, than those of air alone, the rate of heat exchange between the gas and the flue walls is increased. A further result is that a higher baking temperature of the carbon bodies is thus attainable for a given flue gas temperature. Thus a saving in energy can be expected, for achievement of the same baking results, because a somewhat lower maximum flue gas temperature may be used.

In the normal operation of a ring furnace the mass flow rate of air at the burners required to effect the necessary heat transfer is greatly in excess of the stoichiometric amount required to burn the fuel. Water injected into the air stream can replace some of this excess air and therefore enables a reduction in its amount. The theoretical upper limit of the amount of water that may be used is that which, keeping the same thermal mass, enables the mass flow rate of air to be reduced to the stoichiometric quantity required for combustion.

The introduction of cold water spray into the air stream in the flues of a ring furnace can conveniently be achieved by means of a travelling water spray manifold with nozzles arranged to be inserted through the service ports of the flue systems which are parallel the rows of pits. The water spray manifold is advanced by steps when the firing nozzle and other service equipment is advanced in the manner explained above.

In its broadest terms the present invention provides a process for preheating, baking and cooling carbon bodies formed from particulate carbon admixed with a carbonaceous binder by heat exchange with gases in at least one flue, into which fuel for combustion is injected at one or more firing locations and cooling air is introduced at one or more air inlet locations upstream of said firing location or locations and flue gas is withdrawn from said flue at a location downstream from said firing location or locations, said carbon bodies and said firing location or locations being moved relatively to each other so that each carbon body is advanced successively through a preheating zone lying between the gas exhaust and firing location or locations, through a baking zone adjacent said firing location or locations and a cooling zone lying between said air inlet location or first air inlet location in the direction of gas flow and said firing location or locations characterised in that water in liquid or vapour form is introduced into said flue at one or more locations between said air inlet or first of said air inlets and said firing location or first of said firing locations in the direction of gas flow.

Referring now to the accompanying drawings:

Fig. 1 is a partial diagrammatic perspective view of a horizontal flue type ring furnace for baking carbon anodes with some conventional furnace details omitted for clarity.

Fig. 2 is a longitudinal section of the furnace taken through one flue on line 2—2 of Fig. 3.

Fig. 3 is a fragmentary horizontal section on line 3—3 of Fig. 2.

Fig. 4 is a flow diagram of the operation of the furnace.

A ring furnace for baking carbon anodes, as illustrated in Figure 1, comprises a multiplicity of rectangular, open top pits 11 having refractory walls. The pits are aligned in long, parallel rows 12, 13, 14. The lengthwise wall structure between the rows is hollow and contains flues 16 which are in heat exchange relation with the pits 11 in the adjacent rows. For that reason it is provided with baffles 18 and 19 to provide a tortuous path for the flow of air or gas.

Each transverse pit set, indicated at 21, 22, 23 in Fig. 1, is conveniently called a section. Thus, the furnace consists of a large number of sections (each containing several pits 11 side-by-side) arranged longitudinally so that there are at least several long rows (e.g. 12, 13, 14) of pits past which flues 16 extend, through which the flow of gas passes in heat exchange relation with the adjoining pit walls and, in effect, with the contained carbon anode bodies in various stages of heating, baking and cooling.

As will be understood, the anode bodies are preformed and compressed into desired sizes and shapes. They are composed of finely divided carbon, for example calcined petroleum coke, with pitch and/or tar or other carbonaceous binder. They may also include some scrap carbon particles, either unbaked or baked. Each pit usually accommodates several carbon bodies which, for convenience, are supported by fine coke dust or other particulate, thermally conductive, packing material 17. Such material supports the bodies in their "green" state and through the entire operation, so that they may easily be dug out when the baking sequence is over. As will be understood, the baking operation effectively drives out volatile matter and carbonises the binder, yielding essentially monolithic bodies of carbon.

The long flues 16 have service ports 28 in the roof above the refractory baffles 19. Thus each linear flue adjacent an operating row of pits 11 may have connections to an exhaust manifold 30 at section 1′ of pits of a temporary baking unit of sections 1′—16′ in Figure 4.

Fuel burners 32 and 33 may be inserted through the port or ports 28 at the pits where highest temperature of baking is to be reached, whereby a projected flame of oil, gas or the like is directed into the flue 16, through which hot combustion gases are then drawn to the exhaust 30. While in some instances a single burner is sufficient, it is preferable to have at least two such burners at successive service ports of the flue along the row of pits. As will be understood, the primary heat to the carbon anodes is effected by the first burner 32, while further heat to each loading of carbon bodies is effected with the burner 33, when the positions of the exhaust and burners are advanced. If desired, burners may be provided at up to four of the series of ports 28.

In Figure 4 the pits of sections 6′ to 10′, which are located upstream from the first burner (in the direction of gas flow) contain baked carbon bodies in a sequence of stages of cooling, by virtue of air introduced under pressure through an air inlet 35 at pit section 10′. The air so supplied provides oxygen for supporting combustion at the burners 32 and 33 and must reach the burner 33 in appropriately preheated condition. After the burners it passes along as a very hot flue gas, while preheating the unbaked green bodies in pits 3′ to 1′, to the exhaust manifold 30 where it is drawn out under suction at a substantially reduced temperature by a blower and discharged through a stack (not shown).

The exhaust manifold 30 extends to a duct 39 (and thence to blower and stack) which can be lifted and moved to the ports 28 for the next section of pits at appropriate intervals. Similarly, the fuel burners are supplied by manifolds 40, which supply fuel, such as oil or gas, and primary air, to the burners 32, 33. The supply of air at inlet 35 is conveniently under pressure via a movable manifold 42. Alternatively, the ports 28 upstream of the burners may be left open to enable atmospheric air to be induced into the flues, the pressure within which being then always below atmospheric, i.e. with no forced air cooling. It will be understood that when nothing is to be introduced or removed through a given service port 28, it can be closed as with a cap 43 (Fig. 2).

In accordance with the present invention, the furnace system incorporates water-spray nozzles 44 introduced into ports 28 of the flues at one or more locations between the air inlet 35 (or first open port 28 of the temporary baking unit) and the burners 33. These nozzles are supplied by the transverse manifold 45 so that a spray of water is injected into the air in each flue, and such moisture is thereby carried along the flue by the air. It is preferred to inject the cooling air at a distance from the firing section 5′ of about six sections or more, with the cooling air supplied under pressure by a blower toward the burner sections, as shown in Fig. 4. It is preferred to introduce the water spray at a distance of about three pit sections (for example at 8′, somewhat more than halfway) from the burner 33 toward the air inlet 35, as shown in Fig. 4.

Some of the introduced air may be allowed to escape at 46 at about the same locality as the water sprays to avoid an excess of air at the point of combustion of the burners 32 and 33. In other instances, the air may indeed be introduced with little or no supplemental pressure at the inlet points 35, relying solely on the forced draft from the exhaust manifold 30. In any case, it is preferred to provide water spray in the gas as it passes at least two and advantageously three or more pit sections containing hot, baked bodies, in advance of the burners 33. Each spray nozzle 44 is preferably designed to project a fan-shaped spray having a suitable angle, say 60° to 100°, between its emerging sides, as for example 94°, and is so aligned as to minimise direct impingement of water on the refractory walls of the flues to avoid damage to the refractory walls.

To explain the operation of a furnace system as shown, it will be assumed that each row 12, 13, 14 (Fig. 1) comprises up to 30 or 40, of pits 11. In the pits of sections 1′ to 10′ of Fig. 4, the packed carbon anodes are undergoing successive stages of the process: preheated to successively higher temperatures in sections 1′, 2′ and 3′; heated to and held at baking temperature in sections 4′ and 5′; and cooled to successively lower temperature in sections 6′, 7′, 8′, 9′ and 10′. Green bodies are loaded in pits to the left of section 1′, i.e. in sections 16′, 15′ and so on, while cooled, baked bodies are unloaded in sections 13′ and 14′. It will be understood that each pit row may accommodate several temporary baking units constituted by pits of sections 1′ to 10′, with the function of each pit being changed by one step at appropriate intervals.

Thus after a selected interval the exhaust manifold 30, burner nozzles 32 and 33, water sprays 44 and air injection manifold 42 are each advanced in the direction of gas flow by a distance of one pit, i.e. to the left in Figure 4. Flue closure baffles 48 at the ends of the temporary baking unit are also appropriately removed and advanced by one step. Hence, after such shift, fresh, green bodies in the pits of section 16′ begin to be preheated by hot gas in the adjacent flue sections, and the baked bodies in the pits of section 12′ are ready for unloading. In this fashion, several complete cycles of multi-step treatment move regularly along each row of pits to achieve what is essentially a continuous anode baking process. Adjustment of firing times and cooling intervals are made as needed so as always to achieve sufficient preheating, baking and cooling of the carbon bodies.

Each of the manifold systems 30, 40, 45 and 42 is designed to be lifted and replaced bodily, and to be moved progressively from section to section along the rows, to turn at the ends of the furnace, and to be moved in the opposite direction along the adjacent parallel half of the furnace for the sequential stepwise operation as described above. For accurate control of the procedure, temperature measuring instruments, e.g. thermocouples (not shown), may be inserted in each flue line at suitable places, as in the path of preheating gas and in the path of cooling gas.

In the practice of the invention, water is sprayed into the flues in quite small amounts, for instance about 0.1 to 0.5 kg of water per kilogram of carbon block production. The water is preferably sprayed in liquid state, and is understood to be promptly converted to vapour as it is carried by the air along each flue. Although it could conceivably be injected as steam the absorption by the water of heat of vaporisation contributes desirably to the cooling function.

In a plant test using a furnace of the type herein described, water was injected as in the diagram of Figure 4 via nozzles 44 at a distance of three pits from burner 33. The water was injected at a rate 0.23 kg per kg of carbon anode produced. After 210 hours of cooling, e.g. when the burner 33 (and other devices) had advanced by 5 stages of slightly over 40 hours each, hot anode bodies in original section 6′ had completed sufficient cooling to become the equivalent of anodes in section 11′ in Fig. 4, and had been reduced from an average baking temperature of about 1100°C to about 400°C. During cooling, water vapour was present in the air stream at the three hottest sections, with essentially air alone in the other two sections. Anode bodies cooled in the same sequence, e.g. a parallel row of pits, but without any water injection, only reached a temperature of 510°C after the same 210 hours of cooling with air alone.

As another example, a further plant test was made, which lasted for three months, in a furnace similar to the one described. Cold, filtered water was injected at a pressure of 137 kPa (1.4 kg per $cm^2$) into the cooling flues adjacent each of three pits of the third cooling section from the burners 33 in Fig. 4. The sprays were advanced about every 40 hours at the same time as the burners. The baked anodes were cooled through the entire sequence from an average baking temperature of about 1325°C for a total average period of about 200 hours. About 0.38 kg of water was used per kg carbon production. At the end of such time, they were ready for discharge and had a temperature approximately 140°C lower than that of control anodes similarly baked but cooled with forced air only, being a mean of 390°C compared with 530°C. It is generally inconvenient to remove the anodes at temperatures above 400°C. Hence, the results were distinctly superior with the air containing spray or vapour; with air cooling alone, further sections would be needed to reach the same low values of temperature. The consequent reduction in process time is very advantageous for the throughput or production rate of a given furnace.

In this example, other temperature comparisons were measured at the baking stage: the mean final baking temperature of the test anodes was increased by about 17°C as a result of the greater heat emissivity from the air/water vapour mix in the flue, but the temperature of the adjacent refractory lining was approximately 20°C lower.

It is contemplated that water is dispersed, as water spray or vapour, into the air or gas travelling in the furnace flue system. Normally the water content of the gas can be about 0.1 kg per $m^3$ (NTP), preferably 0.05 to 0.2 kg/$m^3$, or even in the range 0.02 to 0.3 kg/$m^3$. As will be understood, baking temperatures for carbon anodes or the like can preferably be in the range 1050° to 1250°C, or more generally in some cases, 1000° to 1400°C.

The invention may be used alone or in conjunction with forced air cooling in the final stages of cooling and is applicable both to horizontal-flue ring furnaces as herein illustrated, and to other systems such as so-called vertical-flue furnaces, which are well known. In the latter type of furnace, the gas, for cooling or heating, passes through flues vertically (downward) along four sides of the enclosure pits, having crossed the top of each pit (through a space constituting a part of the flue system), and travels under the pits and to the next section through an intermediate upward duct. The sections are arranged in linear succession along the two parallel parts of the ring layout and provision for supplying air, water spray, fueled fire and for gas exhaust are intermittently advanced along the ring as described above so that the stated steps of loading, preheating, baking, cooling and unloading are sequentially performed, and the improvement of introducing water spray or vapour according to this invention is effected in essentially the same manner as in the horizontal flue furnace.

In the furnace of Fig. 1, the parallel series of sections constituting the other part of the ring is indicated at A, with the pits 11*a* aligned in rows identical to the described series of pits 11 and with identical, movable manifolds partly shown, e.g. for water spray 45*a*, fuel 40*a* and exhaust 30*a*, there being crossover flues (not shown) at the ends of the rows of pits, as is usual.

The improvement in the process for baking carbon electrodes has been described above exclusively in terms of operation in a furnace system in which there is a relative movement between stationary carbon bodies and movable cooling air inlet(s), burner(s) and gas exhaust. It is also applicable to a system in which the carbon bodies are movable either continuously or by intermittent steps through a tunnel in heat exchange relationship with a flue or flues in which the air inlet(s), water spray (or steam inlet), the burner(s) and flue gas exhaust are all at predetermined positions. The use of the water spray system permits the use of a shorter length of the tunnel for cooling and a longer length for preheating and baking, so that the output of baked carbon bodies may be improved or the overall heat input to the system decreased.

**Claims**

1. A process for preheating, baking and cooling carbon bodies formed from particulate carbon admixed with a carbonaceous binder by heat exchange with gases in at least one flue, into which fuel for combustion is injected at one or more firing locations and cooling air is introduced at one or more air inlet locations upstream of said firing location or locations and flue gas is withdrawn from said flue at a location downstream from said firing location or locations, said carbon bodies and said firing location or locations being moved relatively to each other so that each carbon body is advanced successively through a preheating zone lying between the gas exhaust and firing location or locations, through a baking zone adjacent said firing location or locations and a cooling zone lying between said air inlet location or first air inlet location in the direction of gas flow and said firing location or locations characterised in that water in liquid or vapour form is introduced into said flue at one or more locations between said air inlet or first of said air inlets and said firing location or first of said firing locations in the direction of gas flow.

2. A process according to claim 1 in which the carbon bodies are located in a series of individual pits, the walls of which are in heat exchange relation with at least one gas flue, the location of said air inlet or first of said air inlets, of said gas exhaust and of said firing location or locations being advanced along said flue in the direction of gas flow by the length of one pit at predetermined intervals characterised in that water in liquid or vapour form is introduced into said flue at one or more locations which are advanced along said flue in the direction of gas flow in step with the advance of said firing location or locations.

3. A process according to claim 1 or 2 further characterised in that the water-vapour containing air stream flows through the flue at the firing location or locations and continues to flow through the flue to the gas exhaust location.

4. A process according to claim 2 or 3 further characterised in that air is introduced into the flue under pressure at a single location and water is sprayed into the flue in liquid droplet form at a location which is closer to the air inlet than to the firing location or first firing location.

5. A process according to claim 4 further characterised in that the water spray is located at a distance of at least the length of three pits from said firing location.

6. A process according to claim 4 or 5 further characterised in that a part of said air stream is exhausted from said flue at a position adjacent to and upstream of said water spray location.

7. A process according to any preceding claim further characterised in that water is introduced into the air stream in an amount of about 0.1—0.5 kg per kilogram of baked and cooled carbon electrode product.

8. A process according to any preceding claim further characterised in that the water content of the air stream between the water introduction location and the firing location is 0.02—0.3 kg per cubic metre of air (measured at N.T.P.).

9. A process according to claim 8 further characterised in that the water content of the air stream is 0.05—0.2 $kg/m^3$ (N.T.P.).

## Revendications

1. Un procédé pour préchauffer, cuire et refroidir des articles en carbone formés à partir de carbone en particules mélangé avec un liant carboné par échange de chaleur avec des gaz dans au moins un carneau, dans lequel un combustible est injecté pour combustion à un ou plusieurs points de chauffage et de l'air de refroidissement est introduit à un ou plusieurs points d'entrée d'air en amont du point ou des points de chauffage et le gaz de carneau est évacué du carneau à un point situé en aval du point ou des points de chauffage, les articles en carbone et le ou les points de chauffage étant déplacés les uns par rapport aux autres de manière que chaque article en carbone passe successivement à travers une zone de préchauffage située entre le point de sortie du gaz et le ou les points de chauffage, à travers une zone de cuisson adjacente au point ou aux points de chauffage et à travers une zone de refroidissement située entre le point d'entrée d'air ou le premier point d'entrée d'air dans la direction du courant de gaz et le ou les points de chauffage, caractérisé en ce que de l'eau à l'état liquide ou à l'état de vapeur est introduite dans le carneau à un ou plusieurs endroits entre l'entrée d'air ou la première des entrées d'air et le point de chauffage ou le premier des points de chauffage dans la direction du courant de gaz.

2. Un procédé selon la revendication 1, dans lequel les articles en carbone sont situés dans une série de cavités individuelles, dont les parois sont en relation d'échange de chaleur avec au moins un carneau, la position de l'entrée d'air ou de la première des entrées d'air, de la sortie du gaz et du point ou des points de chauffage étant avancée le long du carneau dans la direction du courant de gaz de la longueur d'une cavité à des intervalles prédéterminés, caractérisé en ce que de l'eau à l'état liquide ou à l'état de vapeur est introduite dans le carneau à un ou plusieurs endroits qui sont avancés le long de ce carneau dans la direction du courant de gaz en synchronisme avec l'avancement du ou des points de chauffage.

3. Un procédé selon l'une des revendications 1 et 2, caractérisé en outre en ce que le courant d'air contenant de la vapeur d'eau s'écoule dans le carneau au point ou aux points de chauffage et continue à s'écouler dans le carneau jusqu'au point de sortie du gaz.

4. Un procédé selon l'une des revendications 2 et 3, caractérisé en outre en ce que l'air est introduit dans le carneau sous pression à un seul endroit et que l'eau est pulvérisée dans le carneau sous la forme de gouttelettes de liquide à un point plus proche de l'entrée d'air que du point de chauffage ou du premier point de chauffage.

5. Un procédé selon la revendication 4, caractérisé en outre en ce que la pulvérisation de l'eau est effectuée à une distance du premier point de chauffage au moins égale à la longueur de trois cavités.

6. Un procédé selon l'une des revendications 4 et 5, caractérisé en outre en ce qu'une partie du courant d'air est évacuée du carneau à un point proche et en amont du point de pulvérisation d'eau.

7. Un procédé selon l'une quelconque des revendications précédentes, caractérisé en outre en ce que l'eau est introduite dans le courant d'air à raison d'environ 0,1—0,5 kg par kilogramme de produit électrode en carbone cuit et refroidi.

8. Un procédé selon l'une quelconque des revendications précédentes, caractérisé en outre en ce que la teneur en eau du courant d'air entre le point d'introduction d'eau et le point de chauffage est de 0,02 à 0,3 kg par mètre cube d'air (mesuré à température et pression normalisées).

9. Un procédé selon la revendication 8, caractérisé en outre en ce que la teneur en eau du courant d'air est de 0,05—0,2 kg/$m^3$ (TPN).

**Patentansprüche**

1. Verfahren zum Vorerwärmen, Backen und Kühlen von Kohlenstoffkörpern aus feinteiliger Kohle, die mit einem kohlenstoffhaltigen Binder abgemischt ist durch Wärmeaustausch mit Gasen in wenigstens einem Feuerzug, in welchen Brennstoff zur Verbrennung an einer oder mehreren Brennstellen eingespritzt wird und Kühlluft an einen oder mehreren Stellen stromaufwärts zu der oder den Brennstelle(n) eingeführt wird und Verbrennungsgas von der Brennstelle an einer stromabwärts von der oder den Brennstelle(n) gelegenen Stelle abgezogen wird, wobei die Kohlenstoffkörper und die Brennstelle(n) relativ zueinander bewegt werden, so daß jeder Kohlenstoffkörper allmählich durch eine Vorheizzone zwischen dem Gasabzug und der oder den Brennstelle(n) durch eine Backzone, die an der oder den Brennstelle(n) angrenzt und eine Kühlzone, die zwischen der Lufteinlaßstelle oder der ersten Lufteinlaßstelle liegt, in Richtung des Gasstromes und der Brennstelle(n) geführt wird, dadurch gekennzeichnet, daß Wasser in Flüssigform oder Dampfform in den Feuerzug an einer oder mehreren Stellen zwischen den Lufteinlaß oder dem ersten der Lufteinlässe und der Brennstelle oder der ersten der Brennstellen in Richtung des Gasflusses eingeführt wird.

2. Verfahren gemäß Anspruch 1, bei dem die Kohlenstoffkörper in einer Reihe von einzelnen Gruben lokalisiert sind, deren Wände in Wärmeaustausch mit wenigstens einem Verbrennungsabgas stehen, wobei der Ort des Lufteinlasses oder des ersten der Lufteinlässe, des Abgases und der Brennstelle(n) längs des Feuerzugs in Richtung des Gasstromes um die Länge einer Grube in vorbestimmten Intervallen fortschreitet, dadurch gekennzeichnet, daß Wasser in Flüssigform oder Dampfform in den Feuerzug an einen oder mehreren Stellen eingeleitet wird, die längs des Feuerzugs in Richtung des Gasstromes in Stufen mit dem Fortschreiten der Feuerzone(n) fortschreiten.

3. Verfahren gemäß Anspruch 1 oder 2, dadurch gekennzeichnet, daß der wasserdampfhaltige Luftstrom durch den Feuerzug an der oder den Brennstelle(n) strömt und weiter durch den Feuerzug zu dem Ort des Gasaustrittes strömt.

4. Verfahren gemäß Anspruch 2 oder 3, dadurch gekennzeichnet, daß Luft in den Feuerzug unter Druck an einer einzelnen Stelle eingeführt wird und das Wasser in den Feuerzug in Form von Flüssigtropfen an einer Stelle eingesprüht wird, die näher dem Lufteinlaß als der Brennstelle oder der ersten Brennstelle ist.

5. Verfahren gemäß Anspruch 4, dadurch gekennzeichnet, daß der Wasserspray in einer Entfernung, die wenigstens der Länge von drei Gruben entspricht, von der Brennstelle angeordnet ist.

6. Verfahren gemäß Anspruch 4 oder 5, dadurch gekennzeichnet, daß ein Teil des Luftstromes von dem Feuerzug in einer anliegenden und stromaufwärts liegenden Stelle des Wassersprays abgezogen wird.

7. Verfahren gemäß einem der vorhergehenden Ansprüche, dadurch gekennzeichnet, daß Wasser in den Luftstrom in einer Menge von etwa 0,1 bis 0,5 kg pro kg des gebacken und gekühlten Kohleelektrodenproduktes eingeführt wird.

8. Verfahren gemäß einem der vorhergehenden Ansprüche, dadurch gekennzeichnet, daß der Wassergehalt des Luftstromes zwischen dem Ort des Wassereinlasses und des Brennens 0,02 bis 0,3 kg/$m^3$ Luft (gemessen bei N.T.P.) beträgt.

9. Verfahren gemäß Anspruch 8, dadurch gekennzeichnet, daß der Wassergehalt des Luftstromes 0,05 bis 0,2 kg/$m^3$ (N.T.P.) beträgt.

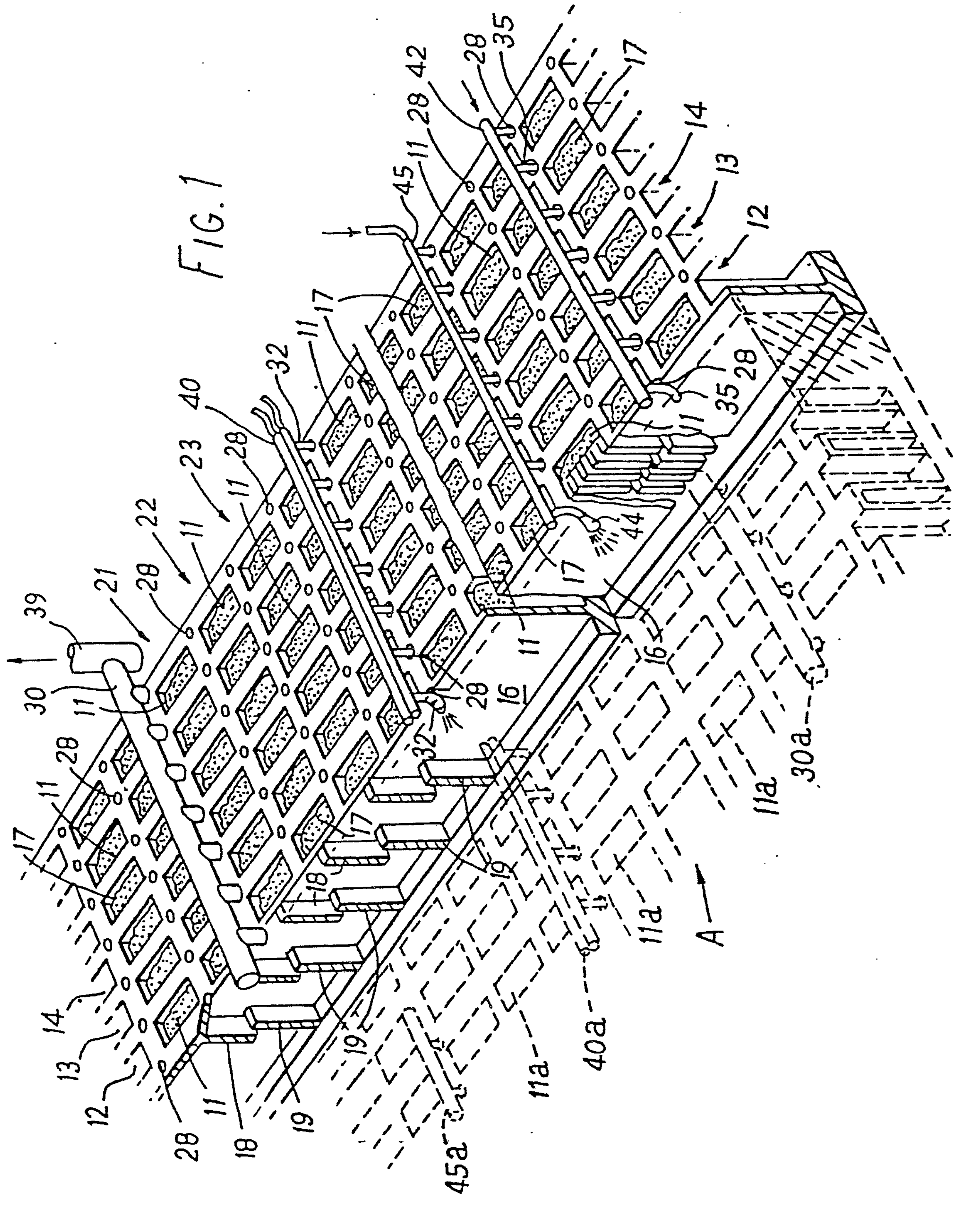

FIG. 1

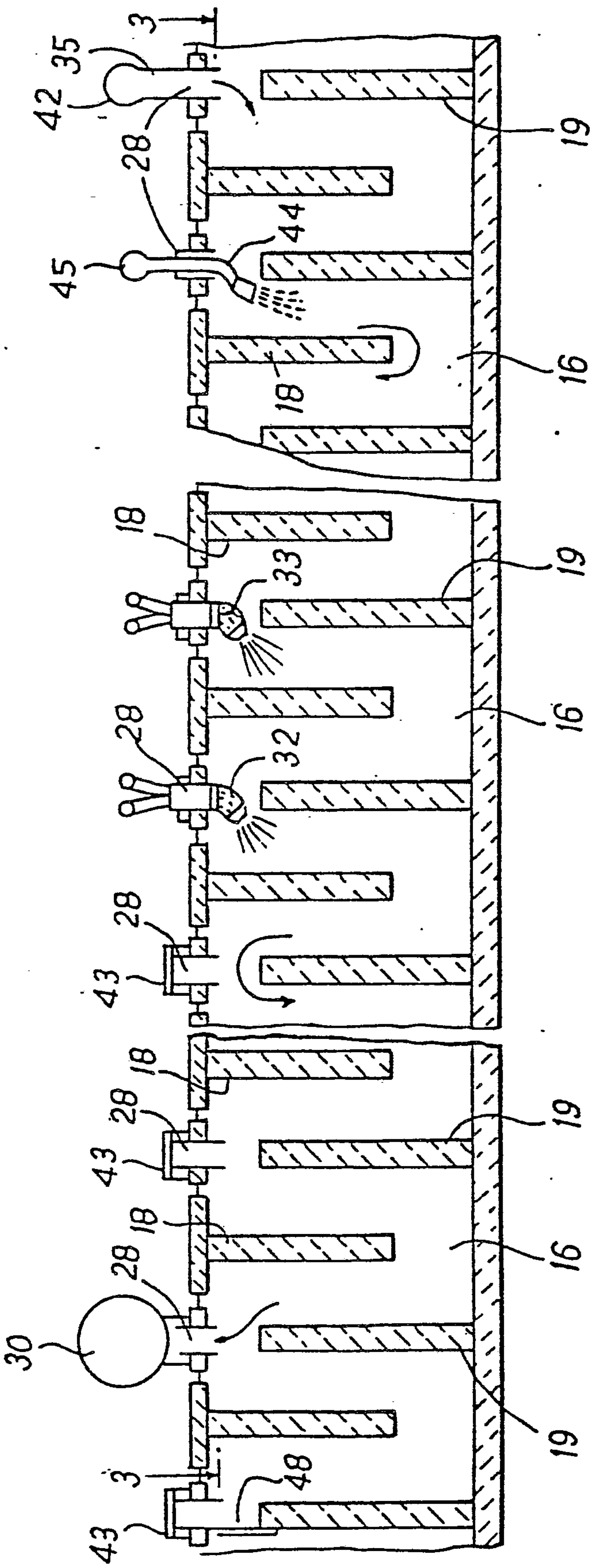


FIG. 2

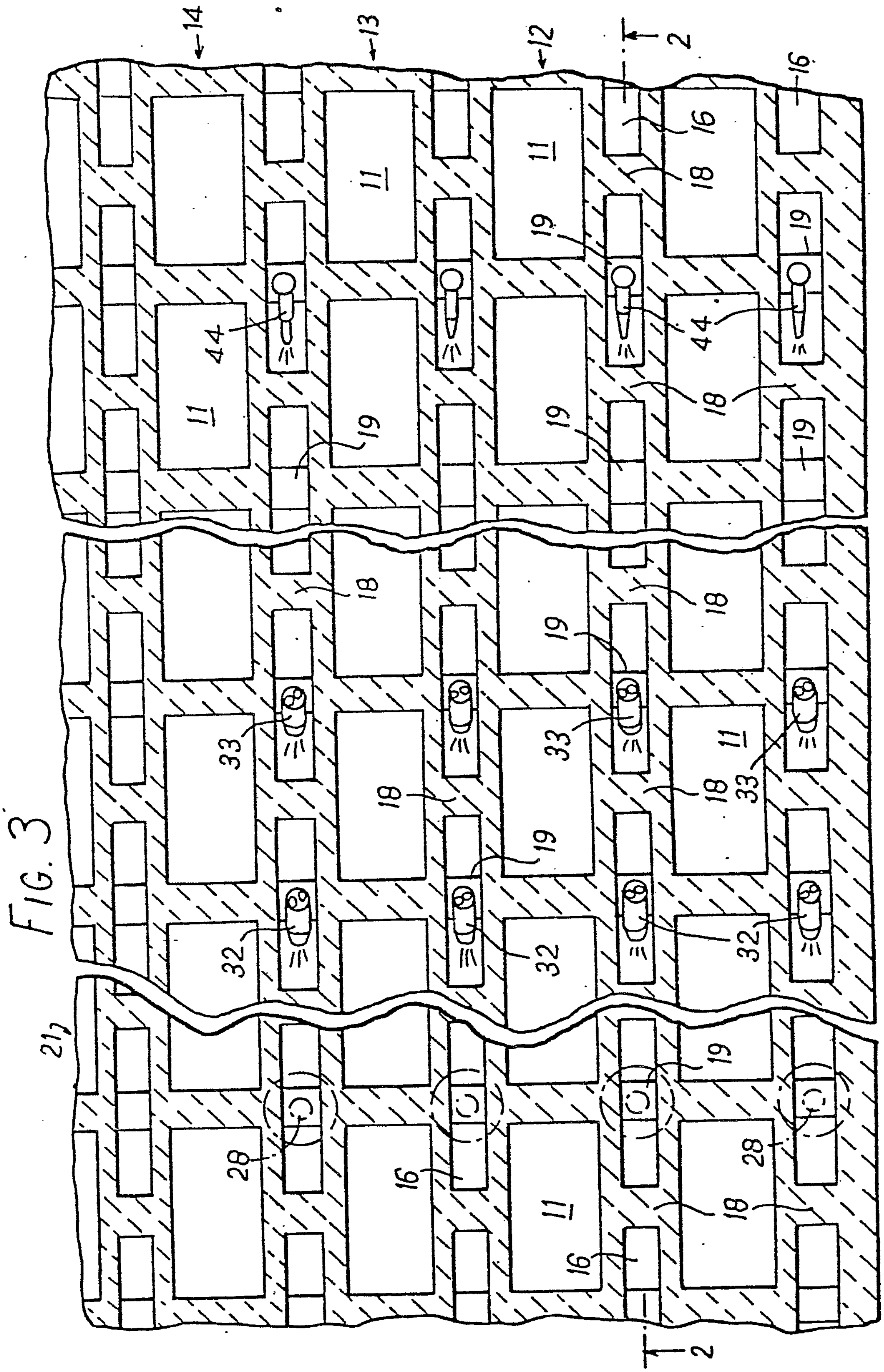


FIG. 3

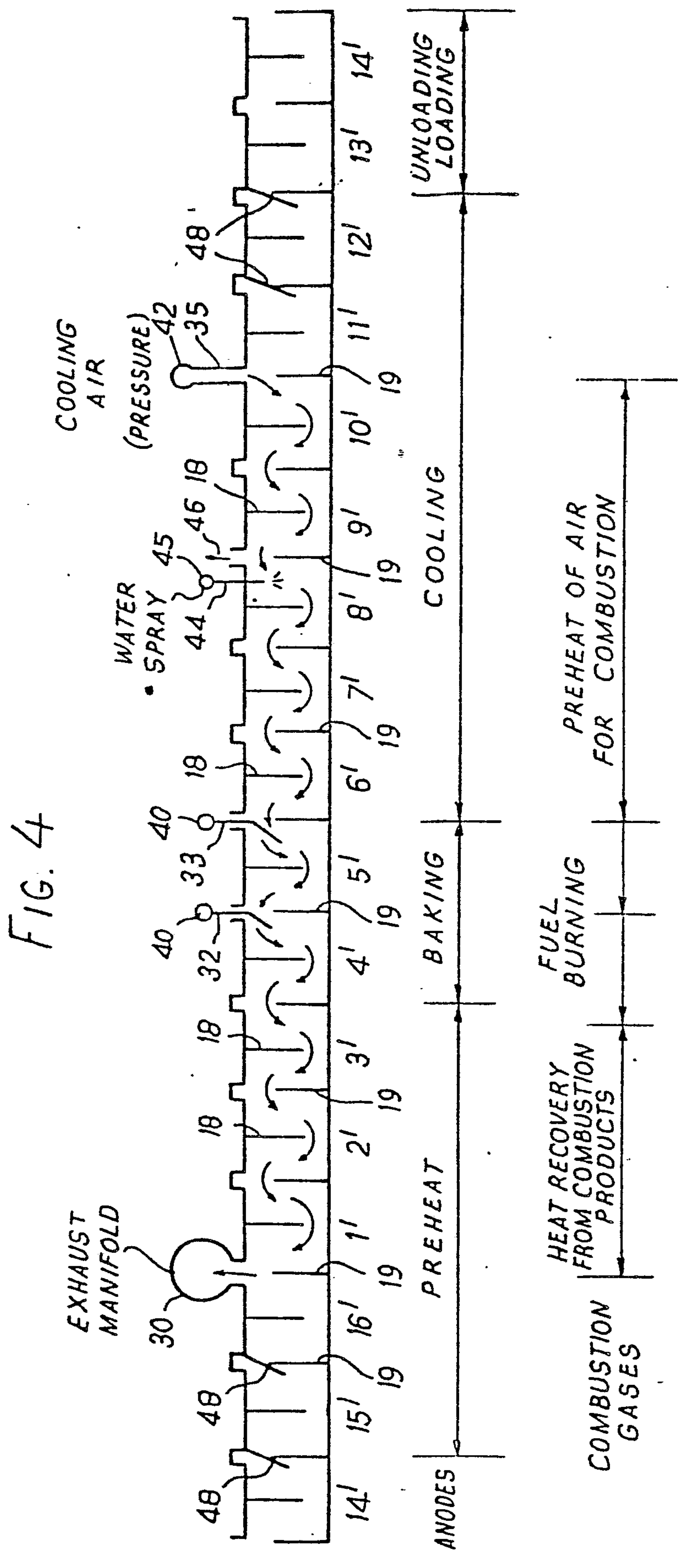

EXHAUST MANIFOLD
30
48
18
32
40
33
COOLING AIR (PRESSURE)
42
35
WATER SPRAY
44
45
46
14'
15'
16'
1'
2'
3'
4'
5'
6'
7'
8'
9'
10'
11'
12'
13'
19
ANODES
PREHEAT
BAKING
COOLING
UNLOADING LOADING
COMBUSTION GASES
HEAT RECOVERY FROM COMBUSTION PRODUCTS
FUEL BURNING
PREHEAT OF AIR FOR COMBUSTION


FIG. 4